(19) Europäisches Patentamt
European Patent Office
Office européen des brevets

(11) **EP 3 425 010 B1**

(12) **EUROPEAN PATENT SPECIFICATION**

(45) Date of publication and mention
of the grant of the patent:
**22.04.2020 Bulletin 2020/17**

(21) Application number: **18190752.8**

(22) Date of filing: **16.02.2017**

(51) Int Cl.:
***C09D 1/00*** *(2006.01)*     ***C09D 5/16*** *(2006.01)*

(54) **PROTECTIVE MEMBER, MOVING OBJECT, AND METHOD FOR FORMING PROTECTIVE MEMBER**

SCHUTZELEMENT, BEWEGTOBJEKT UND VERFAHREN ZUR HERSTELLUNG DES SCHUTZELEMENTS

ÉLÉMENT DE PROTECTION, OBJET MOBILE ET PROCÉDÉ DE FORMATION D'ÉLÉMENT DE PROTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2016 JP 2016043048**

(43) Date of publication of application:
**09.01.2019 Bulletin 2019/02**

(62) Document number(s) of the earlier application(s) in accordance with Art. 76 EPC:
**17000259.6 / 3 216 835**

(73) Proprietor: **Hitachi, Ltd.**
**Chiyoda-ku**
**Tokyo 100-8280 (JP)**

(72) Inventors:
• **KATSUMURA, Nobuhito**
**Chiyoda-ku,, Tokyo 100-8280 (JP)**
• **OKADA, Norihisa**
**Chiyoda-ku,, Tokyo 100-8280 (JP)**

(74) Representative: **Strehl Schübel-Hopf & Partner**
**Maximilianstrasse 54**
**80538 München (DE)**

(56) References cited:
**WO-A1-2013/171579     JP-A- 2008 156 427**

## Description

### Technical Field

The present invention relates to a protective member, a moving object, and a method for forming a protective member.

### Background Art

In a moving object such as a railroad car or an automobile, a stain sticks to or accumulates on the surface thereof. For example, in a railroad car, a metal powder generated by friction between a wheel and a rail during running sticks to the surface of a moving object and accumulates thereon. The metal powder is oxidized to rust on the surface of the moving object, and a brown colored stain is generated.

In order to improve the antifouling property of the moving object, it is effective to form a protective film having a surface structure applicable to various types of stains on the surface of the moving object.

For example, JP-A-2008-156427 (PTL 1) discloses "a water-repellent antifouling hard coat composition which stably imparts weather resistance and heat resistance to the surface of a base material, and also decreases the surface energy so as to maintain a water-repellent effect over a long period of time, and can remove scale which is a main cause for decreasing the aesthetic appearance by a simple work such as washing with water" as a technique relating to a composition for forming a water-repellent antifouling hard coat on the surface of a base material.

The document WO 2013/171579 A1 discloses a composition and method for producing a hybrid sol-gel surface coating on a substrate, wherein the substrate may be metallic. The coating material includes two different kinds of organofunctional silanes having hydrocarbyl groups, wherein one of the hydrocarbyl groups includes at least one radically polymerizable functional group.

### Citation List

### Patent Literature

PTL 1: JP-A-2008-156427

## Summary of Invention

### Technical Problem

In PTL 1, adhesiveness between the water-repellent antifouling hard coat and the base material to which the water-repellent antifouling hard coat composition is applied is not taken into account.

If a hard coat is formed using the water-repellent antifouling hard coat composition disclosed in PTL 1 on the surface made of a metallic material, the hard coat is peeled off in some cases. In particular, in a moving object such as a railroad car or an automobile, the surface is likely to be scratched by a flying stone or a metal piece scattered during running, and the hard coat is peeled off from the scratched portion and deterioration proceeds in some cases.

In such a case, for example, when the adhesive strength of the water-repellent antifouling hard coat which is a protective film to the car body is low, the protective film is peeled off, and the original function of the protective film cannot be performed, and the surface of the car body is deteriorated. In general, the adhesive strength of a hard coat having water repellency to a base material of a car body is decreased, however, PTL 1 does not take this point into account.

Further, a sheet with an adhesive material is attached to the surface of a railroad car or the like for decoration or advertisement in some cases. In general, a hard coat having water repellency has a low adhesive strength to a sheet with an adhesive material, and therefore, in the case where such a sheet material with an adhesive material is attached to the surface of the water-repellent antifouling hard coat formed using the water-repellent antifouling hard coat composition disclosed in PTL 1, the sheet material may be easily peeled off.

Further, a railroad car or the like is used for a long period of time in a state of being exposed to sun light or wind and rain, and therefore, the coat is required to have weather resistance so that deterioration such as cracking or chalking hardly occurs when it is used outdoors for a long period of time as a protective film formed on the surface of a moving object.

An object of the present invention is to provide a protective member having an antifouling property, and also having excellent adhesiveness to a base material and excellent weather resistance, a moving object using the same, and a method for forming a protective member.

**Solution to Problem**

The invention proposes to solve the above problems by providing a moving object and a method according to the independent claims.

Further, a preferred embodiment of the moving object according to the present invention is characterized in that a protective member including an organic-inorganic composite material containing an organic component and an inorganic component, and an organometallic complex is placed on at least a portion of the surface thereof.

Further, a preferred embodiment of the method for forming a protective member according to the present invention is characterized by forming a protective member precursor by mixing a precursor of an organic-inorganic composite material containing an organic component and an inorganic component with an organometallic complex, and forming a protective member on a base material by the protective member precursor.

**Advantageous Effects of Invention**

According to the present invention, a protective member having an antifouling property, and also having excellent adhesiveness to a base material and excellent weather resistance, a moving object using the same, and a method for forming a protective member can be realized.

**Brief Description of Drawings**

FIG. 1 is a cross-sectional view showing a configuration example of a protective member according to an embodiment.

FIG. 2 is a cross-sectional view showing a configuration example of a protective member of a reference comparative example.

FIG. 3 is a side view of a railroad car.

FIG. 4 is a view for illustrating a method for forming a protective member.

FIG. 5 is a view showing Table 1 of the evaluation results of Example 1 to Example 10.

FIG. 6 is a view showing Table 2 of the evaluation results of Example 11 to Example 23.

FIG. 7 is a view showing Table 3 of the evaluation results of Comparative Example 1 to Comparative Example 3.

**Description of Embodiments**

Hereinafter, embodiments of the present invention will be described in detail with reference to the drawings.

**[First Embodiment]**

**<Protective Member>**

Hereinafter, a protective member according to an embodiment will be described.

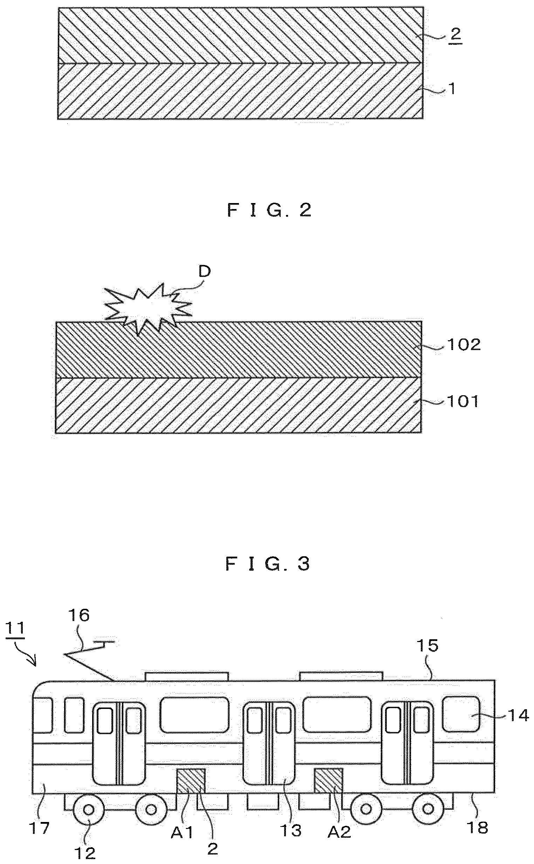

FIG. 1 is a cross-sectional view showing a configuration example of the protective member according to the embodiment. As shown in FIG. 1, a protective member 2 is formed so as to cover the surface of a base material 1. As the base material 1, for example, a metallic material, a ceramic, a resin, or a complex thereof is exemplfied.

The protective member 2 includes an organic-inorganic composite material and an organometallic complex. The organic-inorganic composite material is a film material to be adhered to the base material 1, and is formed by chemically bonding an organic component to an inorganic component to form a composite at the molecular level or nanometer level. The organic-inorganic composite material can be formed using, for example, a material containing an inorganic component such as a vitreous body and an organic component such as an organic polymer. The organic-inorganic composite material is described as a film material in consideration that it is applied thinly in the description of this application, but is not limited thereto, and includes a concept of an organic-inorganic composite material other than the film material, for example, a plate material or the like.

As the organic-inorganic composite material, specifically, for example, a material which includes a component mainly composed of a siloxane bond (Si-O-Si) as the inorganic component and also has a component of a resin such as an epoxy resin, an acrylic resin, or a urethane resin as the organic component can be used. By including a siloxane bond, a hard film is formed, and also the resistance to deterioration of the film due to irradiation with UV light by sun light can be improved.

The protective member 2 can be formed by, for example, applying or placing a protective member precursor obtained by mixing a precursor of an organic-inorganic composite material with an organometallic complex on the surface of the base material 1, followed by drying. The method for forming the protective member 2 will be described in detail later.

By configuring the protective member 2 to have a film structure including an organic-inorganic composite material and an organometallic complex, weather resistance can be obtained while maintaining an excellent antifouling property and excellent adhesiveness.

Specifically, a high hardness as the protective member 2 can be obtained by the inorganic component contained in the organic-inorganic composite material. According to this, damage to the surface of the base material 1 by a hard foreign substance such as dust or a metal powder can be reduced, and also a colored stain can be prevented from sticking thereto.

Further, the protective member 2 can ensure adhesiveness to the base material 1 by the organic component contained in the organic-inorganic composite material. Therefore, it is possible to reduce the peel-off of the protective member 2 by, for example, an impact when a foreign substance collides with the surface of the protective member 2 or due to the expiration of the service period.

Further, the adhesiveness of the protective member 2 to the base material 1 is enhanced by the organic component contained in the organic-inorganic composite material, and therefore, the peel-off of the protective member 2 is prevented when a foreign substance or a stain sticking to the surface of the protective member 2 is removed by washing, and the resistance to washing can be maintained.

In particular, the organic-inorganic composite material has excellent adhesiveness also to a metallic material or a paint material. Therefore, by forming the protective member 2 on the surface made of a metallic material or a paint material, the peel-off of the protective member 2 can be prevented when performing shower washing or scraping with a brush. Due to this, the resistance of the protective member 2 to a washing treatment can be improved.

If the protective member is composed only of the inorganic component, a sufficient adhesive strength is not obtained. Therefore, when a stain such as rust is tried to be removed by washing the surface, the protective member is peeled off from the surface made of a metallic material or a paint material in some cases.

Further, the protective member 2 ensures the adhesive strength to a sheet with an adhesive material by the organic-inorganic composite material. Therefore, for example, when a sheet with an adhesive material for decoration or advertisement is attached to the surface of the protective member 2, the peel-off or the like of the attached sheet material can be prevented.

If the protective member is formed from, for example, a coating film exhibiting water repellency by mixing a fluorine compound or the like, the surface of the protective member has a low adhesive strength to a sheet with an adhesive material, and therefore, the sheet material may be easily peeled off resulting in deterioration of the external appearance. In addition, when a sheet material is peeled off from the surface of a moving object in a state where the moving object moves, there is also a possibility to cause an accident.

Further, the weather resistance of the protective member 2 is enhanced by the inorganic component contained in the organic-inorganic composite material or the organometallic complex, and therefore, the occurrence of a problem such as cracking or chalking is suppressed. Due to this, by forming the protective member 2 on the surface of the base material 1, for example, a structure body such as a moving object can be used even outdoors for a long period of time. For example, an organic substance such as a resin material generally has low weather resistance, and therefore, if the protective member is composed only of a resin material, deterioration due to UV light contained in sun light is likely to occur.

As the organic-inorganic composite material, for example, a material obtained by using a mixture of a metal alkoxide and an organic polymer having a polar group such as a hydroxy group as a precursor of the organic-inorganic composite material, and reacting these materials can be used. In this case, a chemical bond is formed between a metal oxide obtained by hydrolysis of the metal alkoxide and the organic polymer so as to complex both materials, whereby the organic-inorganic composite material is formed.

Further, the organic-inorganic composite material can also be formed using, for example, a compound having an organic group capable of interacting with an organic substance and a hydrolyzable group including a metal component within its molecule like a silane coupling agent or a compound such as a polysiloxane having an organic group. For example, in the case where a silane coupling agent is used, a mixture obtained by mixing a metal or a metal oxide with an organic polymer along with a silane coupling agent is used as the precursor of the organic-inorganic composite material, and these materials are reacted with one another, whereby the organic-inorganic composite material can be formed as a film body. In this case, the organic-inorganic composite material is formed by chemically bonding the metal or metal oxide to the organic polymer through the silane coupling agent.

As the organic-inorganic composite material, from the viewpoint of ease of production or obtaining stability as a film, a material containing a component including silicon as a main chain backbone such as a siloxane bond described above as the inorganic component is preferred. Further, the inorganic component contained in the organic-inorganic composite material is not limited to a component including silicon as a main chain backbone, and it is also possible to apply a component including titanium, zirconia, or aluminum in a main chain backbone.

The organometallic complex is formed such that an organic compound is coordinated to a central metal element as a ligand. As the central metal element, at least one element selected from the group consisting of zirconium, titanium, zinc, aluminum, nickel, cobalt, iron, manganese, and vanadium can be used. Among these metal elements, aluminum, titanium, nickel, zirconium, or zinc can be preferably used as the central metal element. In particular, from the viewpoint of improving the weather resistance, titanium, nickel, zirconium, or zinc can be more preferably used. Above all, zirconium or zinc can be particularly preferably used.

By including the organometallic complex in the organic-inorganic composite material, the weather resistance of the protective member 2 can be improved. The organometallic complex is mixed with the precursor of the organic-inorganic composite material, and therefore is preferably a material which is dissolved in a solvent of the precursor of the organic-inorganic composite material.

As the organometallic complex, the invention proposes to use zirconium tetraacetylacetonate, zirconium tributoxy monoacetylacetonate, zirconium dibutoxy bis-ethylacetoacetate, titanium tetraacetylacetonate, titanium diisopropoxy bis-acetylacetonate, titanium isopropoxy bis-ethylacetoacetate, titanium di-2-ethylhexoxy bis(2-ethyl-3-hydroxyhexoxide), titanium 1,3-propanedioxy bis-ethylacetoacetate, zinc bis-acetylacetonate, aluminum tris-acetylacetonate, nickel bis-acetylacetonate, cobalt bis-acetylacetonate, iron bis-acetylacetonate, iron tris-acetylacetonate, manganese bis-acetylacetonate, or vanadium bis-acetylacetonate. These organometallic complexes may be used alone or may be used by mixing a plurality of types thereof.

Among the materials exemplified above, particularly, zirconium tetraacetylacetonate, titanium tetraacetylacetonate, zinc bis-acetylacetonate, aluminum tris-acetylacetonate, nickel bis-acetylacetonate, cobalt bis-acetylacetonate, iron bis-acetylacetonate, iron tris-acetylacetonate, manganese bis-acetylacetonate, and vanadium bis-acetylacetonate are materials which are hardly hydrolyzed and therefore are advantageous from the viewpoint of their stability when they are applied to a coating agent. It is because when a material which is easily hydrolyzed is applied to a coating agent, a decomposition reaction may proceed by moisture in the air after unsealing.

The content of the organometallic complex in the protective member 2 is preferably from 1.0 to 50 mass%, desirably from 5.0 to 50 mass%, more desirably from 10 to 50 mass%.

In particular, from the viewpoint of the solubility of the metallic complex in an organic solvent or in consideration of the conditions of use when it is applied while volatilizing a solvent such as spray application, the content of the organometallic complex having low solubility is desirably from 1.0 to 2.0 mass%.

By setting the content of the organometallic complex to 1.0 mass% or more, in the protective member 2, the effect of improving the weather resistance can be obtained. When the content of the organometallic complex in the protective member 2 is 50 mass% or less, the close adhesion of the protective member 2 to the base material 1 can be sufficiently obtained. Therefore, the peel-off from the base material 1 hardly occurs, and the surface of the base material can be protected.

Incidentally, the content of the organometallic complex in the protective member 2 can be set to more than 50 mass%, however, in this case, the close adhesion of the protective member 2 to the base material 1 is decreased in some cases. However, in the case where the base material 1 is, for example, glass, the close adhesion of the protective member 2 to the base material 1 is hardly decreased. Therefore, in this case, in the protective member 2, it is possible to set the content of the organometallic complex to more than 50 mass%.

The hardness of the protective member 2 is preferably a pencil hardness of 5H or more. Incidentally, the protective member 2 obtains a substantial hardness by the hardness of the organic-inorganic composite material. By using the protective member 2 having a pencil hardness of 5H or more, hard dust, metal powder, or the like can be prevented from sticking thereto. Incidentally, the pencil hardness is a scratch hardness evaluated based on a pencil hardness test.

By forming the protective member 2 according to the embodiment described above so as to cover the surface of the base material 1, damage to the surface of the base material 1 can be reduced, and the improvement of the antifouling property can be maintained for a long period of time by preventing a colored stain due to rust of a metal component. In the case where the protective member 2 is implemented as a coating material of a railroad car or an automobile, the protective member 2 is hardly peeled off even if a stain sticking to the surface of the protective member 2 is washed off with a brush or a shower. Due to this, the maintenance of the surface of such a structure body becomes easy, and a work of removal and reapplication of the protective member 2 is reduced, and therefore, the expenses for maintenance can be reduced. Further, the protective member 2 has high weather resistance, and therefore, maintenance such as reapplication is not needed for a long period of time, and thus, a long operating time of a railroad car or an automobile can be achieved.

**<Reference Comparative Example>**

A reference comparative example will be shown for comparison with the protective member 2 of this embodiment.

FIG. 2 is a cross-sectional view showing a configuration example of a protective member of a reference comparative example. On the surface of a base material 101, a coating film 102 made of an organic resin component is formed. In FIG. 2, a state where a stain D sticks to the surface of the coating film 102 is shown.

The hardness of the coating film 102 formed from an organic resin is low, and therefore, for example, when a hard foreign substance such as dust or a metal powder is generated around the base material 101, such a foreign substance pierces the surface of the coating film 102 and firmly sticks thereto as the stain D.

The metal powder sticking to the surface of the coating film 102 generates rust to form a brown stain, and is closely adhered to the surface of the base material 101 by volume expansion. When physical removal of the rust closely adhered to the surface of the coating film 102 is tried, the rust itself is brittle, and therefore, fine residues generated during removal are slightly left on the surface of the coating film 102. Further, a rust component penetrates inside the coating film 102 as fine colloidal particles to cause a colored stain in the film material itself. Due to this, in the case where rust is generated on the base material 101, it is difficult to completely remove the rust or a colored stain caused by the rust without damaging the coating film 102.

**[Second Embodiment]**

**<Moving Object>**

FIG. 3 is a side view of a railroad car having a protective member. As shown in FIG. 3, on the outer wall of a railroad car 11, a side surface portion 17 and an upper surface portion 15 which is a roof are formed of a processed material obtained by processing a metal plate. In the side surface portion 17 of the railroad car 11, a door portion 13 which is an opening and closing door, and a window portion 14 are provided. Further, on the upper surface portion 15 of the railroad car 11, a pantograph 16 is provided. On the outer wall of a bottom surface portion 18 of the railroad car 11, wheels 12 are provided.

In the railroad car 11, as the speed is increased during traveling, a hard foreign substance such as dust or a metal powder is likely to violently collide with the surface of the outer wall of the railroad car 11, and firmly sticks to the surface of the outer wall. It is difficult to remove the foreign substance sticking to the surface by normal washing.

On the outer wall of the railroad car 11, the above-mentioned protective member 2 is formed. Therefore, sticking of a hard foreign substance such as a metal powder or dust can be prevented on the outer wall of the railroad car 11, and also a colored stain caused by rust of a metal component can be prevented, and thus, an excellent antifouling property can be obtained.

According to this, in the case where the surface of the outer wall is periodically washed, a period until next washing is performed can be extended as compared with the case where a conventional coating material is used. The outer wall refers to a region in contact with the air outside the railroad car 11. Further, by the improvement of the weather resistance, the frequency of repainting of the protective member 2 on the outer wall of the railroad car 11 can be reduced. In addition, by the reduction in the frequency of washing or repainting, the operating ratio of the railroad car 11 can be improved.

Further, when a washing treatment such as brush washing is performed, as the frequency is increased, the surface is worn away. As described above, by covering the surface of the outer wall of the railroad car 11 with the protective member 2, the washing frequency can be reduced. Therefore, the service life of the railroad car 11 can be improved.

Incidentally, when a known paint material is applied to the surface of the outer wall of the railroad car 11, by a paint film, a slight antifouling property is obtained, however, the following problem arises. That is, in general, as the paint material, a material obtained by adding a pigment with a micron size into an organic resin is used. In this case, by solidifying the organic resin containing pigment particles, a paint film in which the pigment particles are dispersed in an organic resin film mainly composed of the organic resin is formed.

The surface of the paint film is soft as a whole and has a low hardness because the area occupied by the organic resin film present among the pigment particles is large. Therefore, when the object is used outdoors as in the case of the railroad car 11, a hard foreign substance such as dust or a metal powder collides with the surface of the paint film, and pierces the surface and firmly sticks to the paint film. Due to this, the aesthetic appearance of the surface is likely to be deteriorated by the foreign substance sticking to the surface or a colored stain due to rust. On the other hand, by forming the protective member 2 on the surface of the paint film as in this embodiment, sticking of a hard foreign substance such as dust or a metal powder or generation of rust can be prevented. Due to this, the antifouling property can be improved as compared with the case where a conventional paint film is formed as the outermost surface layer.

Further, the surface of an insulating material such as a conventional paint material has low hydrophilicity, and therefore, a fine foreign substance or dust is easily adsorbed thereon by static electricity. By forming the protective member 2 of this embodiment on the surface of a conventional paint film, owing to the inorganic component contained in the organic-inorganic composite material, sticking of such a fine foreign substance or dust can be reduced, and the antifouling property can be improved.

Further, in the railroad car 11, from the viewpoint of reduction of the cost for painting or design, a metallic material such as aluminum or stainless steel is used or put to practical use in a state where the surface is not painted in some cases. When a metallic material is used in a state where the surface is not painted, a so-called rust stain is easily generated by sticking of a metal component such as iron present in a surrounding environment thereto.

By covering the surface of a metallic material with the protective member 2 of this embodiment, the surface of the metallic material is physically protected, and sticking of a metal component to the surface of the metallic material is prevented. Therefore, generation of metal rust on the surface of the metallic material or a colored stain caused thereby can be effectively prevented, and the antifouling property can be improved.

The protective member 2 may be formed on the side surface portion 17 of the railroad car 11, but may also be formed on the upper surface portion 15 in addition thereto. When a colored stain is generated on the upper surface portion 15 of the railroad car 11, sun light is easily absorbed, and the cooling efficiency of the moving object is decreased in some cases. By forming the protective member 2 on the upper surface of the moving object, a stain on the upper surface can be reduced. According to this, the cooling efficiency in the inside of the railroad car 11 can be improved.

In the railroad car 11, a stain is easily generated on the upper surface portion 15 due to a foreign substance generated when traveling while the pantograph 16 is coming into contact with a wiring. By forming the protective member 2 on the upper surface portion 15, sticking of such a foreign substance or a colored stain caused thereby can be prevented, and the antifouling property can be improved.

Incidentally, in the second embodiment, the description is made by showing the railroad car as an example, however, also in the case where the protective member 2 is applied to the outer wall of an automobile or an airplane, an effect of improving the antifouling property and improving the adhesiveness can be obtained.

[Third Embodiment]

<Method for Producing Protective Film>

Next, a method for producing the protective member 2 according to the embodiment will be described.

The precursor of the organic-inorganic composite material contains an organic component and an inorganic component, and by mixing the precursor of the organic-inorganic composite material with the organometallic complex, a protective member precursor is prepared.

As the precursor of the organic-inorganic composite material, it is preferred to use, for example, a compound whose curing reaction such as formation of $SiO_2$ proceeds at normal temperature. However, the precursor of the organic-inorganic composite material is not limited to a compound which is cured at normal temperature. For example, an organic-inorganic composite film precursor may be formed using a compound whose curing reaction is accelerated by heating may be formed.

As the precursor of the organic-inorganic composite material, for example, a precursor containing, as the inorganic component, a metal alkoxide such as tetraethoxysilane, tetraisopropoxy titanium, tetra-tertiary butoxy zirconium, or triisobutoxy aluminum, a polysilazane, liquid glass (sodium silicate), a polysilicate having an organic group, an organic silane compound such as a silane coupling agent, or the like can be used.

The precursor of the organic-inorganic composite material can also be prepared using a glass coating agent formed by adding an additive such as a catalyst to a silane compound. The glass coating agent can be used without particular limitation as long as it contains silicon and is a liquid capable of forming a vitreous coating film. Incidentally, in the case where the glass coating agent is used, it is preferred to select a material capable of obtaining a pencil hardness of 5H or more in the organic-inorganic composite material after curing.

The organic component can be used without particular limitation as long as it is a component capable of chemically bonding to the inorganic component. Specifically, for example, a resin component such as an epoxy resin, an acrylic resin, or a urethane resin described above can be used by being mixed with the inorganic component.

As the organometallic complex, the invention proposes to use a material of a type described above. The addition amount of the organometallic complex may be appropriately adjusted so that the weather resistance of the protective member 2 can be improved. It is preferred to adjust the addition amount of the organometallic complex so that the content of the organometallic complex in the protective member 2 is within the range of 1.0 to 50 mass%.

The mixing method is not particularly limited. The mixing method is desirably performed by a method capable of uniformly mixing the organic-inorganic composite film precursor with the organometallic complex. In the mixing, for example, a mixer such as a mixer using a stirring blade, a static mixer, a ball mill, a bead mill, or a homogenizer can be used.

Subsequently, the base material 1 is prepared. Then, on the base material 1, the protective member precursor composed of the organometallic complex and the precursor of the organic-inorganic composite material is applied or placed, whereby a film or a layer structure of the protective member precursor is formed on the base material 1.

In the case where a material with which the organic-inorganic composite material obtained after curing is easily peeled off from the base material 1 is used as the precursor of the organic-inorganic composite material, a primer layer is previously formed on the surface of the base material 1, and thereafter, the protective member precursor may be applied to the surface of the primer layer. The primer layer is a layer formed for improving the adhesive strength of the protective member precursor to the base material 1. As the primer layer, specifically, a layer formed from any of various resins such as an acrylic resin, a phenolic resin, a urethane resin, an epoxy resin, or a polyester resin can be used.

The thickness of the protective member 2 is appropriately from 0.2 to 100 $\mu$m. Therefore, it is preferred to appropriately adjust the application amount of the protective member precursor and apply it onto the base material 1 so as to obtain the thickness within the above range as the protective member 2. It is because when the thickness of the protective member 2 is 0.2 $\mu$m or more, uneven application on the surface of the base material 1 hardly occurs when applying the protective member precursor, and a film formation defect such as the occurrence of a region where the film of the protective member precursor is not formed hardly occurs. It is also because when the thickness of the protective member 2 is 100 $\mu$m or less, a split, a crack, or the like hardly occurs in the protective member 2. When the thickness of the protective member 2 is set to 1 to 50 $\mu$m, uneven application hardly occurs, and also a split, a crack, or the like hardly occurs. Moreover, when the thickness of the protective member 2 is set to 3 to 20 $\mu$m, even if a portion is formed thin by uneven application, the protective member 2 never gets a hole, and therefore, the thickness within such a range is more preferred. In the case where the thickness is set within such a range, the time for curing the protective member 2 by drying can be shortened, and therefore, this also contributes to the reduction of the application time to the railroad car 11 or the like. Moreover, the operation efficiency of the railroad car 11 or the like can be increased.

Subsequently, the film of the protective member precursor formed on the base material 1 is dried. By doing this, the protective member precursor is cured, whereby the protective member 2 is formed on the base material 1. In the drying, usually, the film of the protective member precursor is left at normal temperature (about 27°C) so as to be cured by natural drying.

Incidentally, the film of the protective member precursor may be cured by appropriately heating according to the material of the organic-inorganic composite film precursor. Incidentally, the method for curing the film of the protective member precursor may be appropriately changed according to the property of the material of the protective member precursor. As the curing method other than drying, for example, irradiation with light can be exemplified.

Incidentally, in the case where curing by heating is performed, the curing is performed at such a temperature that the base material 1 is not damaged. The base material 1 is composed of, for example, a metal, a ceramic, a resin, or a complex thereof as described above, and therefore, curing by heating may be performed by appropriately adjusting the temperature so that such a material is not damaged.

According to the method as described above, the protective member 2 having an excellent antifouling property, excellent adhesiveness to the base material 1, and excellent weather resistance can be formed on the surface of the base material 1.

In the above-mentioned method for forming the protective member, an example in which the protective member 2 is formed by applying the protective member precursor to the surface of the base material 1 is shown. However, the method for forming the protective member 2 is not necessarily limited to such a method.

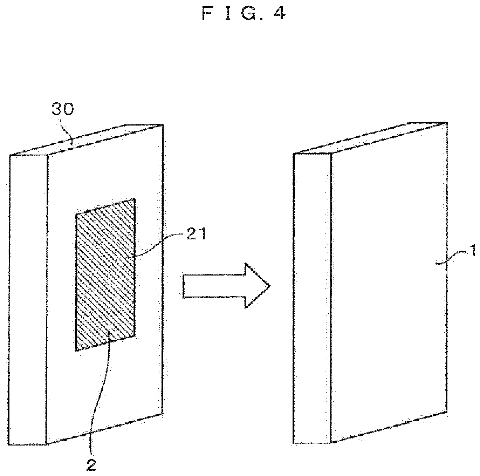

For example, as shown in FIG. 4, by using a transfer member 30 which is different from the base material 1, the protective member 2 may be transferred to the surface of the base material 1. First, a protective member precursor is applied to the surface of the transfer member 30, whereby a film of the protective member precursor is formed thereon. Then, the film of the protective member precursor is cured by drying or the like on the surface of the transfer member 30, whereby the protective member 2 is formed. Then, a surface 21 of the protective member 2 formed on the surface of the transfer member 30 is pressed against the surface of the base material 1. By doing this, the protective member 2 is transferred to the surface of the base material 1 using the surface 21 of the protective member 2 on the transfer member 30 as an adhesive surface to the base material 1.

By using the method shown in FIG. 4, it becomes possible to form the protective member 2 even if the protective member precursor is not directly applied to the surface of the base material 1. That is, by only adhering the surface of the protective member 2 formed on the surface of the transfer member 30 to the surface of the base material 1, the protective member 2 can be formed on the base material 1.

Further, by using the method shown in FIG. 4, drying of the protective member precursor can be performed not on the base material 1, but on the transfer member 30 separately. Therefore, the damage to the base material 1 by drying can be suppressed. Incidentally, also in the method shown in FIG. 4, drying of the protective member precursor may not necessarily performed on the transfer member 30, but may be performed on the base material 1.

**[Example 1]**

The protective member 2 described above will be specifically described below.

First, an aluminum plate was prepared as the base member 1 shown in FIG. 1. Specifically, among Al-Mg-Si-based alloys (6000-based aluminum alloys), 6N01 alloy was used. As the aluminum plate, an aluminum plate with a size of 200 mm x 300 mm and a thickness of 2 mm was used. This aluminum plate was subjected to hairline processing, and the surface of the plate was degreased by wiping using a waste soaked with acetone.

The hairline processing is a kind of surface treatment processing of metal, and is a processing method for forming fine scratches in a single direction. For example, it is performed by scraping the surface of the aluminum plate with a metal brush or the like to form shallow scratches. By performing hairline processing, a matting effect is exhibited on the surface of the aluminum plate, and the metallic texture can be emphasized.

As the raw materials of the precursor of the organic-inorganic composite material, tetraethoxysilane (25 mass%), polydimethylsiloxane (25 mass%), an acrylic resin (25 mass%), an epoxy resin (20 mass%), and a curing agent (5 mass%) were used. To a mixed solvent of toluene, xylene, and butyl acetate at a mass ratio of 4:4:2 (toluene:xylene:butyl acetate), the above-mentioned acrylic resin and epoxy resin were fed, followed by stirring. To this mixture, further tetraethoxysilane and polydimethylsiloxane were fed, followed by stirring, and thereafter, the curing agent was further added, whereby the precursor of the organic-inorganic composite material was prepared.

Subsequently, to the precursor of the organic-inorganic composite material, zirconium tetraacetylacetonate which is the organometallic complex was added, followed by stirring, whereby a coating agent which is the protective member precursor was prepared. Zirconium tetraacetylacetonate was added to the precursor of the organic-inorganic composite material by adjusting the addition amount so that the content thereof in the protective member 2 to be obtained is 20 mass%.

A waste was soaked with the thus obtained coating agent, and the aluminum plate was coated therewith so as not to cause unevenness, whereby a film of the coating agent was formed. By using a drying furnace capable of causing forced convection, the film of the coating agent formed on the aluminum plate was dried. First, the drying furnace was preheated so that the temperature in the furnace was raised to 50°C beforehand, and the aluminum plate having the film of the coating agent formed thereon was placed in this furnace and left therein for 30 minutes to effect drying, whereby the protective member 2 including the organic-inorganic composite material and the organometallic complex was formed on the aluminum plate. After drying, the aluminum plate having the protective member 2 was cooled to normal temperature. When the obtained protective member 2 was confirmed by visual observation, it was confirmed to be a film which is transparent and has no cracks.

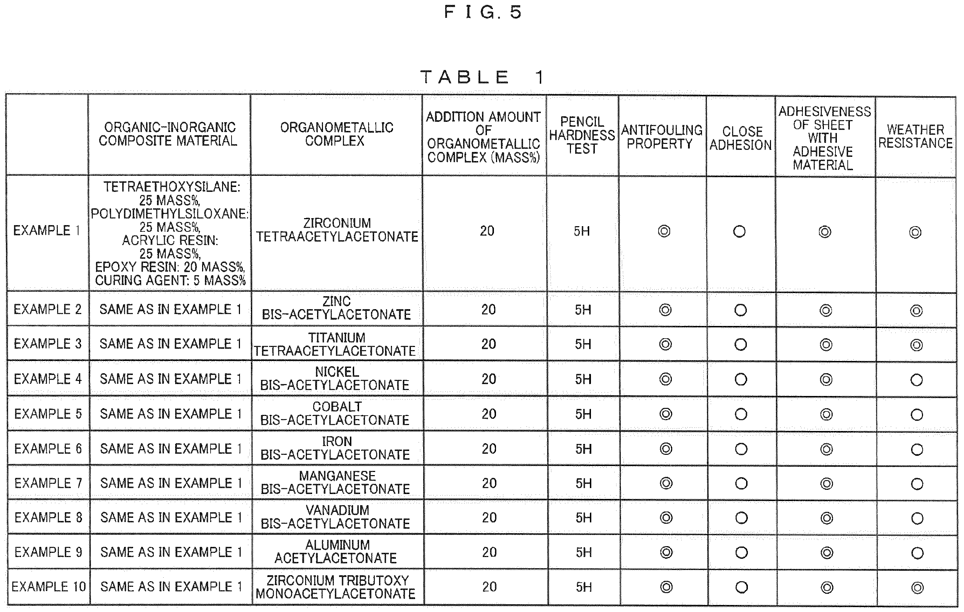

With respect to the protective member 2 on the aluminum plate obtained by the above-mentioned step, the scratch hardness, antifouling property, close adhesion, adhesiveness of a sheet with an adhesive material, and weather resistance were evaluated by the methods shown below. The evaluation results are shown in FIG. 5.

Incidentally, the evaluation of the scratch hardness, antifouling property, close adhesion, adhesiveness of a sheet with an adhesive material, and weather resistance was also performed for Examples 2 to 23 and Comparative Examples 1 to 3 according to the same criteria as the evaluation criteria shown below.

**(Scratch Hardness)**

The scratch hardness was evaluated based on a pencil hardness test (JIS K 5600-5-4). The pencil hardness test is a method in which a pencil is moved while pressing the lead of the pencil against the surface of a sample (in this case, the protective member 2 on the aluminum plate), and a scratch hardness is quantitatively determined using the hardness of the lead of the used pencil as an index according to the presence or absence of a scratch on the surface of the sample.

**(Antifouling Property)**

The antifouling property was evaluated as follows. The aluminum plate having the protective member 2 formed by the above-mentioned step was left in a wet state where the temperature was 50 ± 1°C and the relative humidity was 95% or more for 24 hours, followed by drying by leaving the aluminum plate in a state where the temperature was 23 ± 2°C and the relative humidity was 50 ± 5%.

Subsequently, the aluminum plate after drying was placed on a horizontal plane, and onto the surface of the protective member 2 on the aluminum plate, an iron powder having a particle diameter of 10 μm was uniformly sprayed with a spray gun. Subsequently, this aluminum plate was made to stand vertically, and the surface opposite to the surface onto which the iron powder was sprayed was tapped to drop the iron powder stuck to the surface onto which the iron powder was sprayed.

Subsequently, the aluminum plate having the iron powder stuck to the protective member 2 was left in a high-temperature and high-humidity environment (60°C, humidity: 90%) for 24 hours, and then, the aluminum plate was cooled to room temperature. Subsequently, the aluminum plate and the protective member 2 were washed under running water. Water on the surfaces of the aluminum plate and the protective member 2 after washing was wiped off, followed by drying at room temperature.

The color (L*a*b*) of the protective member 2 before the treatment of sticking the iron powder thereto and after the protective member 2 with the iron powder stuck thereto was left for 24 hours was measured, respectively, using a color difference meter ("color difference meter CR-400" manufactured by Konica Minolta Sensing, Inc.). From the obtained measurement results, a color difference (ΔE) was calculated. The color difference (ΔE) is represented by the following (Formula 1).

[Math. 1]

$$\text{Color difference } \Delta E^{*}{}_{ab} = \{(\Delta L^{*})^{2} + (\Delta a^{*})^{2} + (\Delta b^{*})^{2}\}^{1/2} \quad \text{(Formula 1)}$$

Based on the difference between the color difference (ΔE) before sticking the iron powder and the color difference (ΔE) after sticking the iron powder calculated according to the above (Formula 1), whether the antifouling property was good or bad was determined according to the following criteria. A case where the difference in the color difference (ΔE) was less than 5 was evaluated as "S", a case where the difference in the color difference (ΔE) was 5 or more and less than 15 was evaluated as "A", a case where the difference in the color difference (ΔE) was 15 or more and less than 25 was evaluated as "B", and a case where the difference in the color difference (ΔE) was 25 or more was evaluated as "C".

**(Close Adhesion)**

The close adhesion of the protective member 2 to the aluminum plate was evaluated as follows. First, cuts reaching the aluminum plate were formed in a grid pattern on the protective member 2. Specifically, by using a cutter, 11 linear cuts were formed in each of the vertical direction and the horizontal direction so as to intersect one another. The linear cuts were formed at intervals of 2 mm, respectively. By doing this, a total of 100 squares each with a size of 2 mm x 2 mm and surrounded by the cuts were formed on the protective member 2. In other words, by the linear cuts, the protective member 2 in which a 20 mm x 20 mm region was divided in a grid pattern was formed. Subsequently, to the region in a grid pattern of the protective member 2, a cellophane tape was closely adhered, and then, this cellophane tape was pulled up all at once and peeled off. The procedure of closely adhering and peeling off a cellophane tape was repeated three times. As a result, the area of the protective member 2 peeled off in the region divided in a grid pattern was calculated by visual observation, and the ratio of the area of the peeled portion to the area of the entire region in a grid pattern was calculated as a missing ratio (peeling ratio). By using the obtained missing ratio (peeling ratio), whether the close adhesion is good or bad was determined according to the following criteria. A case where the missing ratio was 0% was evaluated as "A", a case where the missing ratio exceeded 0% and was less than 15% was evaluated as "B", and a case where the missing ratio was 15% or more was evaluated as "C".

**(Adhesiveness of Sheet with Adhesive Material)**

The adhesiveness of a sheet with an adhesive material to the protective member 2 was evaluated as follows. First, the protective member 2 was washed with an organic solvent such as acetone, and then, a decoration cellophane tape with a width of 10 mm and a thickness of 50 μm was pressure-bonded to the surface of the protective member 2. The pressure-bonding of the decoration cellophane tape was performed by allowing a hand-operated roller with a weight of 1 kg covered by providing a rubber with a thickness of 6 mm and a durometer hardness of A80 on a roller with a diameter of 85 mm and a width of 45 mm to reciprocate twice at a speed of 10 mm/s. By doing this, the decoration cellophane tape was pressure-bonded to the surface of the protective member 2 so that air does not enter therebetween. After the resulting material was left to stand for 30 minutes, a 180° peel test was performed at 5 mm/s. When the same test as described above was performed for the aluminum plate on which the protective member 2 was not formed, the adhesive strength was 0.4 N/mm. Therefore, a case where the adhesive strength was 0.35 N/mm or more was evaluated as "S", a case where the adhesive strength was from 0.30 to 0.35 N/mm was evaluated as "A", a case where the adhesive strength was from 0.30 to 0.20 N/mm was evaluated as "B", and a case where the adhesive strength was less than 0.20 N/mm was evaluated as "C".

**(Weather Resistance)**

The weather resistance of the protective member 2 was evaluated as follows. In accordance with JIS B 7754, a xenon-arc lamp type weather resistance testing machine (irradiance on the surface of a sample: 180 W/m$^2$, black panel temperature: $63 \pm 3°C$, water spray: 18 min → irradiation: 102 min) was used, and the evaluation was performed by an accelerated weather resistance test. First, the protective member 2 was formed on an aluminum plate with a size of 700 x 1500 mm. An operation of water spray for 18 min irradiation for 102 min was defined as one cycle, and the surface was observed after 1000 hours of testing time. A case where no damage was observed on the surface was evaluated as "S", a case where small damage such as a fine crack was observed was evaluated as "A", a case where cracks were partially observed was evaluated as "B", and a case where cracks were observed entirely or peeling resulted from the progression of cracks was observed was evaluated as "C".

With respect to the obtained protective member 2, the evaluation of the scratch hardness, antifouling property, close adhesion, adhesiveness of a sheet with an adhesive material, and weather resistance was performed as described above. The evaluation results are shown in FIG. 5 .

Further, also with respect to Example 2 and others thereafter, evaluation was performed in the same manner for the respective evaluation items, and the evaluation results are shown in FIGS. 5 to 7 .

In the respective Examples, with respect to the antifouling property, close adhesion, adhesiveness of a sheet with an adhesive material, and weather resistance, the member evaluated as "B" is sufficiently feasible, however, the member evaluated as "A" or "S" is more favorable.

**[Example 2]**

A coating agent was prepared in the same manner as in Example 1 except that zinc bis-acetylacetonate was used as the organometallic complex, and the protective member 2 was formed on the aluminum plate in the same manner as in Example 1.

**[Example 3]**

A coating agent was prepared in the same manner as in Example 1 except that titanium tetraacetylacetonate was used as the organometallic complex, and the protective member 2 was formed on the aluminum plate in the same manner as in Example 1.

**[Example 4]**

A coating agent was prepared in the same manner as in Example 1 except that nickel bis-acetylacetonate was used as the organometallic complex, and the protective member 2 was formed on the aluminum plate in the same manner as in Example 1.

**[Example 5]**

A coating agent was prepared in the same manner as in Example 1 except that cobalt bis-acetylacetonate was used as the organometallic complex, and the protective member 2 was formed on the aluminum plate in the same manner as in Example 1.

**[Example 6]**

A coating agent was prepared in the same manner as in Example 1 except that iron bis-acetylacetonate was used as the organometallic complex, and the protective member 2 was formed on the aluminum plate in the same manner as in Example 1.

**[Example 7]**

A coating agent was prepared in the same manner as in Example 1 except that manganese bis-acetylacetonate was used as the organometallic complex, and the protective member 2 was formed on the aluminum plate in the same manner as in Example 1.

**[Example 8]**

A coating agent was prepared in the same manner as in Example 1 except that vanadium bis-acetylacetonate was used as the organometallic complex, and the protective member 2 was formed on the aluminum plate in the same manner as in Example 1.

**[Example 9]**

A coating agent was prepared in the same manner as in Example 1 except that aluminum acetylacetonate was used as the organometallic complex, and the protective member 2 was formed on the aluminum plate in the same manner as in Example 1.

**[Example 10]**

A coating agent was prepared in the same manner as in Example 1 except that zirconium tributoxy monoacetylacetonate was used as the organometallic complex, and the protective member 2 was formed on the aluminum plate in the same manner as in Example 1.

**[Example 11]**

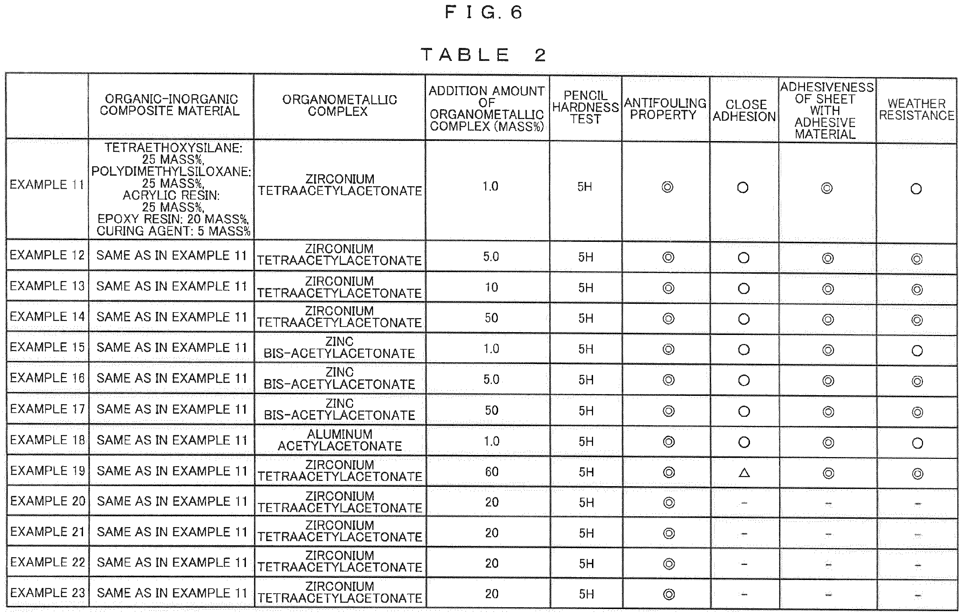

A coating agent was prepared in the same manner as in Example 1 except that the addition amount of zirconium tetraacetylacetonate to be added as the organometallic complex was changed as shown in FIG. 6, and the protective member 2 was formed on the aluminum plate in the same manner as in Example 1.

**[Example 12]**

A coating agent was prepared in the same manner as in Example 1 except that the addition amount of zirconium tetraacetylacetonate to be added as the organometallic complex was changed as shown in FIG. 6, and the protective member 2 was formed on the aluminum plate in the same manner as in Example 1.

**[Example 13]**

A coating agent was prepared in the same manner as in Example 1 except that the addition amount of zirconium tetraacetylacetonate to be added as the organometallic complex was changed as shown in FIG. 6, and the protective member 2 was formed on the aluminum plate in the same manner as in Example 1.

**[Example 14]**

A coating agent was prepared in the same manner as in Example 1 except that the addition amount of zirconium tetraacetylacetonate to be added as the organometallic complex was changed as shown in FIG. 6, and the protective member 2 was formed on the aluminum plate in the same manner as in Example 1.

**[Example 15]**

A coating agent was prepared in the same manner as in Example 2 except that the addition amount of zinc bis-acetylacetonate to be added as the organometallic complex was changed as shown in FIG. 6, and the protective member 2 was formed on the aluminum plate in the same manner as in Example 2.

**[Example 16]**

A coating agent was prepared in the same manner as in Example 2 except that the addition amount of zinc bis-acetylacetonate to be added as the organometallic complex was changed as shown in FIG. 6, and the protective member 2 was formed on the aluminum plate in the same manner as in Example 2.

**[Example 17]**

A coating agent was prepared in the same manner as in Example 2 except that the addition amount of zinc bis-acetylacetonate to be added as the organometallic complex was changed as shown in FIG. 6, and the protective member 2 was formed on the aluminum plate in the same manner as in Example 2.

**[Example 18]**

A coating agent was prepared in the same manner as in Example 9 except that the addition amount of aluminum acetylacetonate was changed to 1. 0 mass%, and the protective member 2 was formed on the aluminum plate in the same manner as in Example 9.

**[Example 19]**

A coating agent was prepared in the same manner as in Example 1 except that the addition amount of zirconium tetraacetylacetonate was changed to 60 mass%, and the protective member 2 was formed on the aluminum plate in the same manner as in Example 1.

**[Example 20]**

The protective member 2 was formed in the same manner as in Example 1 except that the outer wall of the railroad car 11 shown in FIG. 3 was used as the base material 1. As the outer wall of the railroad car 11, an unpainted aluminum plate material subjected to hairline processing was used. In such an outer wall of the railroad car 11, the protective member 2 was formed in the same manner as in Example 1 in regions A1 and A2 in a lower part of the side surface portion 17. This railroad car 11 was used for 3 months in an in-house experimental facility as an ordinary running car. With respect to the railroad car 11 after it was used for 3 months, the scratch hardness and antifouling property of the protective member 2 formed in the regions A1 and A2 were evaluated. The scratch hardness was evaluated in the same manner as in Example 1. As for the antifouling property, the color was measured in the same manner as in Example 1 at the time point before running and at the time point after 3 months' use, respectively. Then, a color difference ($\Delta$E) was calculated according to the above (Formula 1), and a difference between the color difference ($\Delta$E) before running and the color difference ($\Delta$E) after running for 3 months was calculated.

**[Example 21]**

The protective member 2 was formed in the same manner as in Example 20 except that the step performed using the method of Example 1 in Example 20 was performed using the method of Example 2, and the evaluation of the scratch hardness and antifouling property was performed in the same manner as in Example 20. That is, as the base material 1, the outer wall of the railroad car 11 obtained by subjecting an unpainted aluminum plate material to hairline processing was used in the same manner as in Example 20.

**[Example 22]**

The protective member 2 was formed in the same manner as in Example 1 except that the outer wall of an automobile was used as the base material 1. As the automobile, an automobile in which the surface of the outer wall was painted with a paint material was used. That is, the protective member 2 was formed in the same manner as in Example 1 on a portion of the painted surface of the outer wall of the automobile. This automobile was used for 3 months as an ordinary running car. With respect to the protective member 2 of the automobile after 3 months' use, the scratch hardness and antifouling property were evaluated. The evaluation of the scratch hardness and antifouling property was performed in the same manner as in Example 20.

**[Example 23]**

The railroad car 11 for which the scratch hardness and antifouling property were evaluated in Example 20 was allowed to run for an additional half a year, and thereafter sufficiently washed. Then, the protective member 2 was formed on the protective member 2 formed in Example 20 using the same coating agent as used in Example 1, and the evaluation of the scratch hardness and antifouling property was performed. The scratch hardness was evaluated in the same manner as in Example 1. As for the antifouling property, the color was measured in the same manner as in Example 1 at the time point before running for half a year and at the time point when the protective member 2 was formed after running for half a year, respectively. Then, the evaluation was performed based on the difference between the values of the color difference ($\Delta$E) calculated according to the above (Formula 1), respectively.

**(Comparative Example 1)**

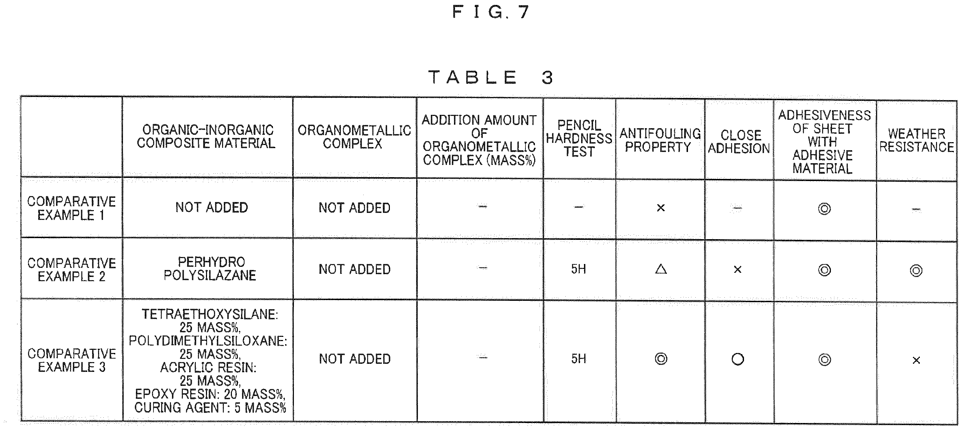

As the base material 1, the same aluminum plate as used in Example 1 was used, and the evaluation of the antifouling property and adhesiveness of a sheet with an adhesive material was performed in a state where the protective member 2 was not formed on this aluminum plate. The evaluation of the antifouling property was performed in the same manner as in Example 1. The evaluation results are shown in FIG. 7.

**(Comparative Example 2)**

As the base material 1, the same aluminum plate as used in Example 1 was used, and a protective member was formed on the surface of this aluminum plate using perhydropolysilazane (manufactured by Clariant Japan K.K.) as the glass coating agent. With respect to the obtained protective member, the evaluation of the scratch hardness, antifouling property, close adhesion, adhesiveness of a sheet with an adhesive material, and weather resistance was performed in the same manner as in Example 1. The evaluation results are shown in FIG. 7.

**(Comparative Example 3)**

A coating agent was prepared in the same manner as in Example 1 except that the organometallic complex was not added to the precursor of the organic-inorganic composite material. By using this coating agent, a protective member was formed in the same manner as in Example 1. With respect to the obtained protective member, the evaluation of the scratch hardness, antifouling property, close adhesion, adhesiveness of a sheet with an adhesive material, and weather resistance was performed in the same manner as in Example 1. The evaluation results are shown in FIG. 7.

**(Comparison between Examples and Comparative Examples)**

According to Examples 1 to 23, the organometallic complex is contained in the organic-inorganic composite material, and therefore, the protective member 2 having an excellent antifouling property, a high hardness, excellent close adhesion, and excellent weather resistance could be obtained.

Further, in Examples 20 to 22, when the external appearance of the protective member 2 on the outer wall of the railroad car 11 or the automobile after 3 months' use was confirmed by visual observation, damage due to deterioration was not confirmed. In addition, also in Example 23, when the external appearance of the protective member 2 on the outer wall of the railroad car 11 after half a year's use was confirmed by visual observation, damage due to deterioration was not confirmed. Further, in the protective member 2 of Example 19, although the close adhesion was slightly poor, excellent weather resistance was obtained.

On the other hand, in Comparative Example 1, the protective member 2 was not formed on the aluminum plate, and therefore, in the evaluation of the antifouling property, the iron powder stuck to the aluminum plate was oxidized to iron oxide, and a colored stain was generated. Due to this, the value of the color difference ($\Delta E$) after sticking the iron powder was larger than the value before sticking the iron powder.

Further, in Comparative Example 2, the organic component was not contained in the protective member formed on the aluminum plate, and therefore, although the weather resistance was favorable, the close adhesion to the aluminum plate was not sufficiently obtained.

Further, in Comparative Example 3, although the antifouling property and close adhesion were favorable, since the organometallic complex was not added to the protective member, the weather resistance was poor, and cracks were generated due to deterioration of the protective member.

The object to which the protective member 2 is applied is not limited to moving objects. For example, also in the case where the protective member 2 is applied to infrastructures such as buildings and bridges, machinery facilities to be used indoors, architectural structures, electrical products such as industrial apparatuses, sanitary products, and the like, an excellent antifouling property and excellent weather resistance can be obtained.

Further, the moving object of the invention of this application can be applied not only to moving objects typified by railroad cars and automobiles, but also to construction machines and elevators as kinds of moving objects. In the description of this application, the moving object refers to an object which includes a unit that runs by itself by actuating wheels or the like as described above, or includes a unit that drives by using a wire, a motor, or the like, so that the apparatus itself moves.

Further, the invention of this application can be applied also to the field of power generation equipment such as photovoltaic power generation apparatuses, photovoltaic power generation modules, wind power generation apparatuses, and wind power generation modules to be used outdoors. It is because these apparatuses are desired to be operated outdoors for a long period of time, and in particular, for wind power generation apparatuses, a protective member having durability is desired due to the rotary movement of a blade.

Further, the invention of this application is not limited to outdoor use, and can be applied also to the field of industrial equipment typified by actuators such as inverters, hoists, and motors, compressors, and the like in facilities such as plants in which a metal powder or the like is generated.

Incidentally, in the above-mentioned embodiments, the member is called "protective member", but may also be referred to as, for example, protective film, protective membrane, coating film, film material, or protective layer.

**Claims**

1.  A moving object comprising:

    a metallic material surface without a paint film including a pigment; and
    a protective member covering the metallic material surface,
    wherein the protective member comprises an organic-inorganic composite material containing an organic component and an inorganic component, and an organometallic complex, **characterized in that** in the organometallic complex, a central metal element to which an organic compound binds as a ligand is at least one element selected from the group consisting of zirconium, titanium, zinc, aluminum, nickel, cobalt, iron, manganese, and vanadium, wherein said organometallic complex is of one of the following types:

    - zirconium tetraacetylacetonate,
    - zirconium tributoxy monoacetylacetonate,
    - zirconium dibutoxy bis-ethylacetoacetate,
    - titanium tetraacetylacetonate,
    - titanium diisopropoxy bis-acetylacetonate,
    - titanium isopropoxy bis-ethylacetoacetate,
    - titanium di-2-ethylhexoxy bis(2-ethyl-3-hydroxyhexoxide),
    - titanium 1,3-propanedioxy bis-ethylacetoacetate,
    - zinc bis-acetylacetonate,
    - aluminum tris-acetylacetonate,
    - nickel bis-acetylacetonate,
    - cobalt bis-acetylacetonate,
    - iron bis-acetylacetonate,
    - iron tris-acetylacetonate,
    - manganese bis-acetylacetonate, or
    - vanadium bis-acetylacetonate
    or a mixture of a plurality of said types, and
    wherein the organic-inorganic composite material is formed using a polysiloxane having an organic group.

2.  The moving object according to claim 1, **characterized in that** the organic-inorganic composite material has a siloxane bond.

3.  The moving object according to claim 1, **characterized in that** the average hardness of the protective member is a pencil hardness of 5H or more.

4.  The moving object according to claim 1, **characterized in that** the content of the organometallic complex is from 1.0 to 50 mass%.

5.  The moving object according to claim 4, **characterized in that** said central meta element is zirconium, and the content of the organometallic complex is from 20 to 50 mass%.

6.  The moving object according to claim 1,
    wherein said central metal element is zirconium,
    and wherein said organometallic complex is of one of the following types:

    - zirconium tetraacetylacetonate,
    - zirconium tributoxy monoacetylacetonate,
    - zirconium dibutoxy bis-ethylacetoacetate,

    or a mixture of a plurality of said types.

7.  The moving object according to one of claims 1 - 6,
    wherein the moving object is a railroad car having pantograph on an upper surface of the railroad car, and the metallic material surface is the upper surface of the railroad car.

8.  A method for forming a protective member covering a metallic material surface, said metallic material surface is not painted by a paint material including a pigment, said method including forming a protective member precursor by mixing a precursor of an organic-inorganic composite material containing an organic component and an inorganic component with an organometallic complex, and forming a protective member on a base material by the protective member precursor,

**characterized in that** in the organometallic complex, a central metal element to which an organic compound binds as a ligand is at least one element selected from the group consisting of zirconium, titanium, zinc, aluminum, nickel, cobalt, iron, manganese, and vanadium, wherein said organometallic complex is of one of the following types:

- zirconium tetraacetylacetonate,
- zirconium tributoxy monoacetylacetonate,
- zirconium dibutoxy bis-ethylacetoacetate,
- titanium tetraacetylacetonate,
- titanium diisopropoxy bis-acetylacetonate,
- titanium isopropoxy bis-ethylacetoacetate,
- titanium di-2-ethylhexoxy bis(2-ethyl-3-hydroxyhexoxide), titanium 1,3-propanedioxy bis-ethylacetoacetate,
- zinc bis-acetylacetonate,
- aluminum tris-acetylacetonate,
- nickel bis-acetylacetonate,
- cobalt bis-acetylacetonate,
- iron bis-acetylacetonate,
- iron tris-acetylacetonate,
- manganese bis-acetylacetonate, or
- vanadium bis-acetylacetonate

or a mixture of a plurality of said types, and
wherein the organic-inorganic composite material is formed using a polysiloxane having an organic group .

9. The method for forming a protective member according to claim 8, **characterized by**
forming a film of the protective member precursor on the surface of the base material, and
forming the protective member by drying the film of the protective member precursor.

10. The method for forming a protective member according to claim 8, **characterized by**
forming a film of the protective member precursor on the surface of another member which is different from the base material, forming the protective member on the surface of the another member by drying the film of the protective member precursor, and transferring the protective member to the surface of the base material from the surface of the another member.

11. The method for forming a protective member according to claim 8, **characterized by** preparing the precursor of the organic-inorganic composite material using a glass coating agent containing silicon.

12. The method according to claim 8, wherein said central metal element is zirconium,
and wherein said organometallic complex is of one of the following types:

- zirconium tetraacetylacetonate,
- zirconium tributoxy monoacetylacetonate,
- zirconium dibutoxy bis-ethylacetoacetate,

or a mixture of a plurality of said types.

13. The method according to one of claims 8-12, wherein the metallic material surface is an upper surface on which a pantograph is placed.

**Patentansprüche**

1. Ein bewegliches Objekt, umfassend:

eine Oberfläche eines metallischen Materials ohne einen Farbfilm, der ein Pigment enthält; und

ein Schutzelement, das die Oberfläche des metallischen Materials bedeckt,
wobei das Schutzelement ein organisch-anorganisches Verbundmaterial, das eine organische Komponente und eine anorganische Komponente enthält, und einen organometallischen Komplex umfasst, **dadurch gekennzeichnet, dass** in dem organometallischen Komplex ein zentrales Metallelement, an das eine organische Verbindung als Ligand bindet, mindestens ein Element ist, das aus der Gruppe ausgewählt ist, die aus Zirkonium, Titan, Zink, Aluminium, Nickel, Kobalt, Eisen, Mangan und Vanadium besteht, wobei der organometallische Komplex von einem der folgenden Typen ist:

- Zirkonium-Tetraacetylacetonat,
- Zirkoniumtributoxymonoacetylacetonat,
- Zirkoniumdibutoxybis-ethylacetoacetat,
- Titan-Tetraacetylacetonat,
- Titan-Diisopropoxybis-acetylacetonat,
- Titan-Isopropoxybis-ethylacetoacetat,
- Titan-Di-2-ethylhexoxybis(2-ethyl-3-hydroxyhexoxid),
- Titan-1,3-Propanedioxy-bis-ethylacetoacetat,
- Zink-Bis-Acetylacetonat,
- Aluminiumtris-acetylacetonat,
- Nickel-Bis-Acetylacetonat,
- Kobalt-Bis-Acetylacetonat,
- Eisen-Bis-Acetylacetonat,
- Eisen-Tris-Acetylacetonat,
- Mangan-Bis-Acetylacetonat oder
- Vanadium-Bis-Acetylacetonat

oder eine Mischung aus mehreren dieser Typen, und
wobei das organisch-anorganische Verbundmaterial unter Verwendung eines Polysiloxans mit einer organischen Gruppe gebildet wird.

2. Bewegliches Objekt nach Anspruch 1,
**dadurch gekennzeichnet, dass** das organisch-anorganische Verbundmaterial eine Siloxanbindung aufweist.

3. Beweglicher Gegenstand nach Anspruch 1,
**dadurch gekennzeichnet, dass** die mittlere Härte des Schutzelements einer Bleistifthärte von 5H oder mehr entspricht.

4. Bewegliches Objekt nach Anspruch 1,
**dadurch gekennzeichnet, dass** der Gehalt des organometallischen Komplexes von 1, 0 bis 50 Massen-% beträgt.

5. Bewegliches Objekt nach Anspruch 4,
**dadurch gekennzeichnet, dass** das zentrale Metallelement Zirkonium ist und der Gehalt des organometallischen Komplexes 20 bis 50 Massen-% beträgt.

6. Bewegliches Objekt nach Anspruch 1,
wobei das zentrale Metallelement Zirkonium ist,
und wobei der organometallische Komplex von einem der folgende Arten ist:

- Zirkoniumtetraacetylacetonat,
- Zirkoniumtributoxymonoacetylacetonat,
- Zirkoniumdibutoxybis-ethylacetoacetat,

oder eine Mischung aus mehreren der genannten Typen.

7. Bewegliches Objekt nach einem der Ansprüche 1 - 6,
wobei das bewegliche Objekt ein Eisenbahnwagen mit einem Pantographen auf einer oberen Fläche des Eisenbahnwagens ist und die Oberfläche des metallischen Materials die obere Fläche des Eisenbahnwagens ist.

8. Verfahren zur Bildung eines Schutzelements, das eine Oberfläche eines metallischen Materials bedeckt, wobei die Oberfläche des metallischen Materials nicht mit einem Farbmaterial, das ein Pigment enthält, bestrichen wird, wobei das Verfahren die Bildung eines Schutzelementvorläufers durch Mischen eines Vorläufers eines organisch-anorganischen Verbundmaterials, das eine organische Komponente und eine anorganische Komponente enthält, mit einem organometallischen Komplex und die Bildung eines Schutzelements auf einem Basismaterial durch den Schutzelementvorläufer umfasst,
**dadurch gekennzeichnet, dass** in dem organometallischen Komplex ein zentrales Metallelement, an welches eine organische Verbindung als Ligand bindet, mindestens ein Element ist, das aus der Gruppe ausgewählt ist, die aus Zirkonium, Titan, Zink, Aluminium, Nickel, Kobalt, Eisen, Mangan und Vanadium besteht, wobei der organometallische Komplex von einem der folgenden Typen ist:

- Zirkonium-Tetraacetylacetonat,
- Zirkoniumtributoxymonoacetylacetonat,
- Zirkoniumdibutoxybis-ethylacetoacetat,
- Titan-Tetraacetylacetonat,
- Titan-Diisopropoxybis-acetylacetonat,
- Titan-Isopropoxybis-ethylacetoacetat,
- Titan-Di-2-ethylhexoxybis(2-ethyl-3-hydroxyhexoxid), Titan-1,3-Propanedioxy-bis-ethylacetoacetat,
- Zink-Bis-Acetylacetonat,
- Aluminiumtris-acetylacetonat,
- Nickel-Bis-Acetylacetonat,
- Kobalt-Bis-Acetylacetonat,
- Eisen-Bis-Acetylacetonat,
- Eisen-Tris-Acetylacetonat,
- Mangan-Bis-Acetylacetonat oder
- Vanadium-Bis-Acetylacetonat

oder eine Mischung aus mehreren dieser Typen, und
wobei das organisch-anorganische Verbundmaterial unter Verwendung eines Polysiloxans mit einer organischen Gruppe gebildet wird.

9. Verfahren zur Bildung eines Schutzelements nach Anspruch 8, **gekennzeichnet durch**
die Bildung eines Films des Vorläufers des Schutzelements auf der Oberfläche des Basismaterials und
die Bildung des Schutzelements **durch** Trocknen des Films des Vorläufers des Schutzelements.

10. Das Verfahren zur Bildung eines Schutzelements nach Anspruch 8,
**gekennzeichnet durch**
die Bildung eines Films des Vorläufers des Schutzelements auf der Oberfläche eines anderen Elements, das sich vom Basismaterials unterscheidet,
Bildung des Schutzelements auf der Oberfläche des anderen Elements **durch** Trocknen des Films des Schutzelement-Vorläufers, und
Übertragung des Schutzelements von der Oberfläche des anderen Elements auf die Oberfläche des Basismaterials.

11. Verfahren zur Bildung eines Schutzelements nach Anspruch 8, **gekennzeichnet durch** die Herstellung des Vorläufers des organisch-anorganischen Verbundmaterials unter Verwendung eines siliziumhaltigen Glasbeschichtungsmittels.

12. Verfahren nach Anspruch 8, wobei das zentrale Metallelement Zirkonium ist,
und wobei der organometallische Komplex von einem der folgenden Typen ist:

- Zirkoniumtetraacetylacetonat,
- Zirkoniumtributoxymonoacetylacetonat,
- Zirkoniumdibutoxybis-ethylacetoacetat,

oder eine Mischung aus einer Vielzahl der genannten Typen.

13. Verfahren nach einem der Ansprüche 8-12, bei dem die Oberfläche des metallischen Materials eine obere Fläche ist, auf der ein Pantograph angeordnet wird.

**Revendications**

1. Objet mobile comprenant :

   une surface de matériau métallique sans film de peinture incluant un pigment ; et
   un élément de protection recouvrant la surface de matériau métallique,
   dans lequel l'élément de protection comprend un matériau composite organique-inorganique contenant un composant organique et un composant inorganique, et un complexe organométallique,
   **caractérisé en ce que** dans le complexe organométallique, un élément métal central auquel un composant organique se lie comme un ligand est au moins un élément choisi parmi le groupe consistant en le zirconium, le titane, le zinc, l'aluminium, le nickel, le cobalt, le fer, le manganèse, et le vanadium, dans lequel ledit complexe organométallique est un parmi les types suivants :

   - tétraacétylacétonate de zirconium,
   - tributoxy(monoacétylacétonate) de zirconium,
   - (dibutoxy)bis(éthylacétoacétate) de zirconium,
   - tétraacétylacétonate de titane,
   - (diisopropoxy)bis(acétylacétonate) de titane,
   - (isopropoxy)bis(éthylacétoacétate) de titane,
   - (di-2-éthylhexoxy)bis(2-éthyl-3-hydroxyhexoxyde) de titane,
   - (1,3-propanedioxy)bis(éthylacétoacétate) de titane,
   - bis(acétylacétonate) de zinc,
   - tris(acétylacétonate) d'aluminium,
   - bis(acétylacétonate) de nickel,
   - bis(acétylacétonate) de cobalt,
   - bis(acétylacétonate) de fer,
   - tris(acétylacétonate) de fer,
   - bis(acétylacétonate) de manganèse, ou
   - bis(acétylacétonate) de vanadium

   ou un mélange d'une pluralité desdits types, et
   dans lequel le matériau composite organique-inorganique est formé en utilisant un polysiloxane ayant un groupe organique.

2. Objet mobile selon la revendication 1, **caractérisé en ce que** le matériau composite organique-inorganique a une liaison siloxane.

3. Objet mobile selon la revendication 1, **caractérisé en ce que** la dureté moyenne de l'élément de protection est une dureté au crayon de 5H ou plus.

4. Objet mobile selon la revendication 1, **caractérisé en ce que** la teneur du complexe organométallique est de 1,0 à 50% en masse.

5. Objet mobile selon la revendication 4, **caractérisé en ce que** ledit élément métal central est le zirconium, et la teneur du complexe organométallique est de 20 à 50% en masse.

6. Objet mobile selon la revendication 1,
   dans lequel ledit élément métal central est le zirconium,
   et dans lequel ledit complexe organométallique est un parmi les types suivants :

   - tétraacétylacétonate de zirconium,
   - tributoxy(monoacétylacétonate) de zirconium,
   - (dibutoxy)bis(éthylacétoacétate) de zirconium,

   ou un mélange d'une pluralité desdits types.

7. Objet mobile selon l'une des revendications 1-6,
   dans lequel l'objet mobile est un wagon de chemin de fer ayant un pantographe sur une surface supérieure du wagon de chemin de fer, et la surface de matériau métallique est la surface supérieure du wagon de chemin de fer.

**8.** Procédé de formation d'un élément de protection recouvrant une surface de matériau métallique, ladite surface de matériau métallique n'est pas peinte par un matériau de peinture incluant un pigment, ledit procédé incluant la formation d'un précurseur d'élément de protection en mélangeant un précurseur d'un matériau composite organique-inorganique contenant un composant organique et un composant inorganique avec un complexe organométallique, et la formation d'un élément de protection sur un matériau de base par le précurseur d'élément de protection, **caractérisé en ce que** dans le complexe organométallique, un élément métal central auquel un composant organique se lie comme un ligand est au moins un élément choisi parmi le groupe consistant en le zirconium, le titane, le zinc, l'aluminium, le nickel, le cobalt, le fer, le manganèse, et le vanadium, dans lequel ledit complexe organométallique est un parmi les types suivants :

- tétraacétylacétonate de zirconium,
- tributoxy(monoacétylacétonate) de zirconium,
- (dibutoxy)bis(éthylacétoacétate) de zirconium,
- tétraacétylacétonate de titane,
- (diisopropoxy)bis(acétylacétonate) de titane,
- (isopropoxy)bis(éthylacétoacétate) de titane,
- (di-2-éthylhexoxy)bis(2-éthyl-3-hydroxyhexoxyde) de titane,
- (1,3-propanedioxy)bis(éthylacétoacétate) de titane,
- bis(acétylacétonate) de zinc,
- tris(acétylacétonate) d'aluminium,
- bis(acétylacétonate) de nickel,
- bis(acétylacétonate) de cobalt,
- bis(acétylacétonate) de fer,
- tris(acétylacétonate) de fer,
- bis(acétylacétonate) de manganèse, ou
- bis(acétylacétonate) de vanadium

ou un mélange d'une pluralité desdits types, et dans lequel le matériau composite organique-inorganique est formé en utilisant un polysiloxane ayant un groupe organique.

**9.** Procédé de formation d'un élément de protection selon la revendication 8,
**caractérisé par**
la formation d'un film du précurseur d'élément de protection sur la surface du matériau de base, et
la formation de l'élément de protection en séchant le film du précurseur d'élément de protection.

**10.** Procédé de formation d'un élément de protection selon la revendication 8,
**caractérisé par**
la formation d'un film du précurseur d'élément de protection sur la surface d'un autre élément qui est différent du matériau de base,
la formation de l'élément de protection sur la surface de l'autre élément en séchant le film du précurseur d'élément de protection, et
le transfert de l'élément de protection sur la surface du matériau de base depuis la surface de l'autre élément.

**11.** Procédé de formation d'un élément de protection selon la revendication 8,
**caractérisé par** la préparation du précurseur du matériau composite organique-inorganique en utilisant un agent de revêtement de verre contenant du silicium.

**12.** Procédé selon la revendication 8, dans lequel ledit élément métal central est le zirconium,
et dans lequel ledit complexe organométallique est un parmi les types suivants :

- tétraacétylacétonate de zirconium,
- tributoxy(monoacétylacétonate) de zirconium,
- (dibutoxy)bis(éthylacétoacétate) de zirconium,

ou un mélange d'une pluralité desdits types.

**13.** Procédé selon l'une des revendications 8-12, dans lequel la surface de matériau métallique est une surface supérieure sur laquelle un pantographe est placé.

F I G. 2

F I G. 3

F I G. 4

FIG. 5

TABLE 1

| | ORGANIC-INORGANIC COMPOSITE MATERIAL | ORGANOMETALLIC COMPLEX | ADDITION AMOUNT OF ORGANOMETALLIC COMPLEX (MASS%) | PENCIL HARDNESS TEST | ANTIFOULING PROPERTY | CLOSE ADHESION | ADHESIVENESS OF SHEET WITH ADHESIVE MATERIAL | WEATHER RESISTANCE |
|---|---|---|---|---|---|---|---|---|
| EXAMPLE 1 | TETRAETHOXYSILANE: 25 MASS%, POLYDIMETHYLSILOXANE: 25 MASS%, ACRYLIC RESIN: 25 MASS%, EPOXY RESIN: 20 MASS%, CURING AGENT: 5 MASS% | ZIRCONIUM TETRAACETYLACETONATE | 20 | 5H | ◎ | ○ | ◎ | ◎ |
| EXAMPLE 2 | SAME AS IN EXAMPLE 1 | ZINC BIS-ACETYLACETONATE | 20 | 5H | ◎ | ○ | ◎ | ◎ |
| EXAMPLE 3 | SAME AS IN EXAMPLE 1 | TITANIUM TETRAACETYLACETONATE | 20 | 5H | ◎ | ○ | ◎ | ◎ |
| EXAMPLE 4 | SAME AS IN EXAMPLE 1 | NICKEL BIS-ACETYLACETONATE | 20 | 5H | ◎ | ○ | ◎ | ○ |
| EXAMPLE 5 | SAME AS IN EXAMPLE 1 | COBALT BIS-ACETYLACETONATE | 20 | 5H | ◎ | ○ | ◎ | ○ |
| EXAMPLE 6 | SAME AS IN EXAMPLE 1 | IRON BIS-ACETYLACETONATE | 20 | 5H | ◎ | ○ | ◎ | ○ |
| EXAMPLE 7 | SAME AS IN EXAMPLE 1 | MANGANESE BIS-ACETYLACETONATE | 20 | 5H | ◎ | ○ | ◎ | ○ |
| EXAMPLE 8 | SAME AS IN EXAMPLE 1 | VANADIUM BIS-ACETYLACETONATE | 20 | 5H | ◎ | ○ | ◎ | ○ |
| EXAMPLE 9 | SAME AS IN EXAMPLE 1 | ALUMINUM ACETYLACETONATE | 20 | 5H | ◎ | ○ | ◎ | ○ |
| EXAMPLE 10 | SAME AS IN EXAMPLE 1 | ZIRCONIUM TRIBUTOXY MONOACETYLACETONATE | 20 | 5H | ◎ | ○ | ◎ | ◎ |

EP 3 425 010 B1

TABLE 2

| | ORGANIC-INORGANIC COMPOSITE MATERIAL | ORGANOMETALLIC COMPLEX | ADDITION AMOUNT OF ORGANOMETALLIC COMPLEX (MASS%) | PENCIL HARDNESS TEST | ANTIFOULING PROPERTY | CLOSE ADHESION | ADHESIVENESS OF SHEET WITH ADHESIVE MATERIAL | WEATHER RESISTANCE |
|---|---|---|---|---|---|---|---|---|
| EXAMPLE 11 | TETRAETHOXYSILANE: 25 MASS%, POLYDIMETHYLSILOXANE: 25 MASS%, ACRYLIC RESIN: 25 MASS%, EPOXY RESIN: 20 MASS%, CURING AGENT: 5 MASS% | ZIRCONIUM TETRAACETYLACETONATE | 1.0 | 5H | ◎ | ○ | ◎ | ○ |
| EXAMPLE 12 | SAME AS IN EXAMPLE 11 | ZIRCONIUM TETRAACETYLACETONATE | 5.0 | 5H | ◎ | ○ | ◎ | ◎ |
| EXAMPLE 13 | SAME AS IN EXAMPLE 11 | ZIRCONIUM TETRAACETYLACETONATE | 10 | 5H | ◎ | ○ | ◎ | ◎ |
| EXAMPLE 14 | SAME AS IN EXAMPLE 11 | ZIRCONIUM TETRAACETYLACETONATE | 50 | 5H | ◎ | ○ | ◎ | ◎ |
| EXAMPLE 15 | SAME AS IN EXAMPLE 11 | ZINC BIS-ACETYLACETONATE | 1.0 | 5H | ◎ | ○ | ◎ | ○ |
| EXAMPLE 16 | SAME AS IN EXAMPLE 11 | ZINC BIS-ACETYLACETONATE | 5.0 | 5H | ◎ | ○ | ◎ | ◎ |
| EXAMPLE 17 | SAME AS IN EXAMPLE 11 | ZINC BIS-ACETYLACETONATE | 50 | 5H | ◎ | ○ | ◎ | ◎ |
| EXAMPLE 18 | SAME AS IN EXAMPLE 11 | ALUMINUM ACETYLACETONATE | 1.0 | 5H | ◎ | ○ | ◎ | ○ |
| EXAMPLE 19 | SAME AS IN EXAMPLE 11 | ZIRCONIUM TETRAACETYLACETONATE | 60 | 5H | ◎ | △ | ◎ | ◎ |
| EXAMPLE 20 | SAME AS IN EXAMPLE 11 | ZIRCONIUM TETRAACETYLACETONATE | 20 | 5H | ◎ | - | - | - |
| EXAMPLE 21 | SAME AS IN EXAMPLE 11 | ZIRCONIUM TETRAACETYLACETONATE | 20 | 5H | ◎ | - | - | - |
| EXAMPLE 22 | SAME AS IN EXAMPLE 11 | ZIRCONIUM TETRAACETYLACETONATE | 20 | 5H | ◎ | - | - | - |
| EXAMPLE 23 | SAME AS IN EXAMPLE 11 | ZIRCONIUM TETRAACETYLACETONATE | 20 | 5H | ◎ | - | - | - |

# FIG. 7

## TABLE 3

| | ORGANIC-INORGANIC COMPOSITE MATERIAL | ORGANOMETALLIC COMPLEX | ADDITION AMOUNT OF ORGANOMETALLIC COMPLEX (MASS%) | PENCIL HARDNESS TEST | ANTIFOULING PROPERTY | CLOSE ADHESION | ADHESIVENESS OF SHEET WITH ADHESIVE MATERIAL | WEATHER RESISTANCE |
|---|---|---|---|---|---|---|---|---|
| COMPARATIVE EXAMPLE 1 | NOT ADDED | NOT ADDED | − | − | × | − | ◎ | − |
| COMPARATIVE EXAMPLE 2 | PERHYDRO POLYSILAZANE | NOT ADDED | − | 5H | △ | × | ◎ | ◎ |
| COMPARATIVE EXAMPLE 3 | TETRAETHOXYSILANE: 25 MASS%, POLYDIMETHYLSILOXANE: 25 MASS%, ACRYLIC RESIN: 25 MASS%, EPOXY RESIN: 20 MASS%, CURING AGENT: 5 MASS% | NOT ADDED | − | 5H | ◎ | ○ | ◎ | × |

EP 3 425 010 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008156427 A
- WO 2013171579 A1